# EUROPEAN PATENT APPLICATION

(11) **EP 2 160 938 A1**
(43) Date of publication of application: **10.03.2010**
(21) Application number: 09167489.5
(22) Date of filing: 07.08.2009
(51) Int. Cl.: A01D 34/14

(54) **Modular sickle bar with integrated locking system**

(30) Priority: 28.08.2008 US 229931
(71) Applicant: Kondex Corporation, Lomira, WI 53048-9440 (US)
(72) Inventor: Stoffel, Neal J., WI 53010 (US)
(74) Representative: Lieke, Winfried

(57) **Abstract**

A modular sickle bar having a knifeback for use in a crop harvesting header having a plurality of cutting sections fastened together and to a knifeback. The sections are locked together with use of a locking system which restrains relative movement of the joined sections along planes parallel to and perpendicular to the longitudinal axis of the knifeback when the crop harvesting header is in use.

## Description

### FIELD OF INVENTION

The present invention is directed to a modular sickle bar having an improved locking system. The sickle bar is comprised of modular cutting sections bolted together and then locked together with use of an integrated locking system having a protrusion on one surface of a modular knifeback and a mating depression to receive the protrusion on the opposite surface of another modular knifeback and to secure such sections thereto.

### BACKGROUND OF THE INVENTION

Considerable crop cutting is performed by combines and other crop cutting machinery. During operation, standing plant material, such as a crop, is pushed by a reel against a cutter bar and then onto a platform, where the cut crop is conveyed toward the center of the platform from either side by the platform auger or belt and then subjected to further harvesting operations. Cutting of the crop is performed by a sickle-type cutting system and method in which a reciprocating knife and stationary countershear (rock guards) cut the crop material between the knives and knife guards in a slicing action. Sickle-type cutting systems and methods are old and well known in the art and remain a predominant cutting technique for combine headers and other crop cutting equipment.

As the width of modern harvesting headers continues to increase, problems, such as increased breakage, associated with the knifeback are created. Breakage is believed to be associated with increased stress and strain forces of the reciprocating cutting system. The magnitude of these forces continues to increase as the length of cutting systems increases and faster reciprocation of the sickle bar is attempted. Thus there is a continuing need in the industry for a stronger, more fatigue resistant knifeback.

The art has utilized modular sickle bars to attempt to ease in the handling and shipment of replacement sickles, but these don't do anything to increase the strength and the fatigue resistance of the sickle bar. The modular sickle bar design of this invention can do both. Such systems are exemplified by United States Patent Numbers 4,805,390; 4,854,114; 4,942,728; 5,040,363; 5,161,357; and 6,886,316.

The art has also utilized locking systems to lock modular sickle bar sections in place. In this regard, see Gebrauchsmuster Number DE 295 11 586 U1 and German Patent Number DE 195 26 191 C2 where a tongue-in-groove locking system is described. Such locking system restrains relative movement of the joined sections in a vertical direction with respect to the ground when the crop harvesting header is in use.

When compared with the tongue-in-groove system described above, the use of the locking system of the present invention results in improved structural integrity of the knifeback assembly because such system locks the modules together in planes parallel and perpendicular to the longitudinal axis of the knifeback portion of the sickle bar.

### SUMMARY OF THE INVENTION

The present invention generally comprises a sickle bar for mounting a plurality of adjoining sickle cutting sections along the length of the bar. The sickle bar includes a knifeback having a longitudinal axis and having top and bottom modular bar assemblies, including at least two modular bars arranged end-to-end to form a knifeback. A plurality of sickle cutting sections are located side-by-side along the knifeback and against one of said bar assemblies and have holes extending through the sections. A fastener extends through the holes in said sickle cutting sections thereby joining together said sickle cutting sections and said top and bottom modular bar assemblies. A locking system having a protrusion on one surface of a first modular cutting section and a mating depression(s) to receive and secure the protrusion(s) on an opposite surface of a second modular cutting section wherein, as oriented with respect to the ground when the cutting system is in use, movement of said first and second cutting sections is restrained in all linear planes parallel to the longitudinal axis of the knifeback and in a plane perpendicular to such axis.

### BRIEF DESCRIPTION OF THE DRAWINGS

Figure 1 is a top view of an assembled knifeback portion of the sickle bar of a first embodiment of the present invention.
Figure 2 is a front view of an assembled knifeback portion of the sickle bar of a first embodiment of the present invention.
Figure 3 is another top view of an assembled knifeback portion of the sickle bar of a first embodiment of the present invention.
Figure 4 is an exploded side view of the assembled knifeback illustrated in Figure 3.
Figure 5 is top view of an assembled knife back portion of the sickle bar a second embodiment of the present invention.
Figure 6 is an exploded side view of the assembled knifeback illustrated in Figure 5.
Figure 7 is a top view of a modular knifeback bar component suitable for use in the present invention following a stamping operation.
Figure 8 is a side view of the modular knifeback bar component shown in Figure 7.

### DETAILED DESCRIPTION OF THE INVENTION

The present invention utilizes a modular sickle bar having a plurality of cutting sections fastened together, such as by bolting, and then locked together with use of a locking system which restrains relative movement of the joined sections along planes parallel to and perpendicular to the longitudinal axis of the knifeback when the crop harvesting header is in use.

The locking system of the present invention functions to improve the structural integrity of the knifeback assembly because it locks the modules together in planes of potential movement. In other words, as oriented with respect to the ground when the cutting system is in use, movement is restrained in all linear planes, including those along the longitudinal axis of the knifeback and perpendicular to such axis.

First, like the tongue and groove system described above, the upper and lower knifeback modules are secured or held together relative to each other on the forward to rear (side to side) plane. Securing by only locking in this manner tends to align the upper and lower modules, but does not materially strengthen the actual joint itself in the manner achieved by the present invention.

Second, a second plane of motion is achieved by keeping the entire assembly straight during the assembly process by locking in two holes per each module, thereby locking the knifeback in a permanent straight line. This arrangement assists in keeping the modular knife back inline along its entire length, thus assisting in keeping the modular knifeback inline while shipping to the user and during installation.

Third, the third plane of movement can be described as the potential of linear movement between modules while the sickle is in motion. In operation, the sickle is operated from only one end and is driven to-and- fro at a high rate of speed thereby causing extreme linear stress and strain at the joint areas. Modular sickles of the prior art rely completely on the proof load of the bolted joint to keep them together. The joint in this invention is locked from any sort of movement because the protrusions are virtually press fit into the mating depression. Such press fit is exposed to the brunt of these extreme forces, not the bolted joint. Hence, harmful and costly failures due to bolt failure are reduced and minimized by the present invention. Linear movement of the modular sections under load along a plane parallel to the longitudinal axis of the knifeback and parallel to the ground leads to excessive wear and breakage of the fastening element and ultimate failure of the knifeback. The movement restraint described above is achieved by the present invention but not by the above-described tongue and groove locking system. Such improved movement restraint is achieved by the integrated locking system of the present invention which utilizes a locking arrangement having a protrusion(s) on one surface of a modular cutting section and a mating depression(s) to receive the protrusion on the opposite surface of another modular cutting section.

The present invention is more completely described and explained by reference to the following drawings.

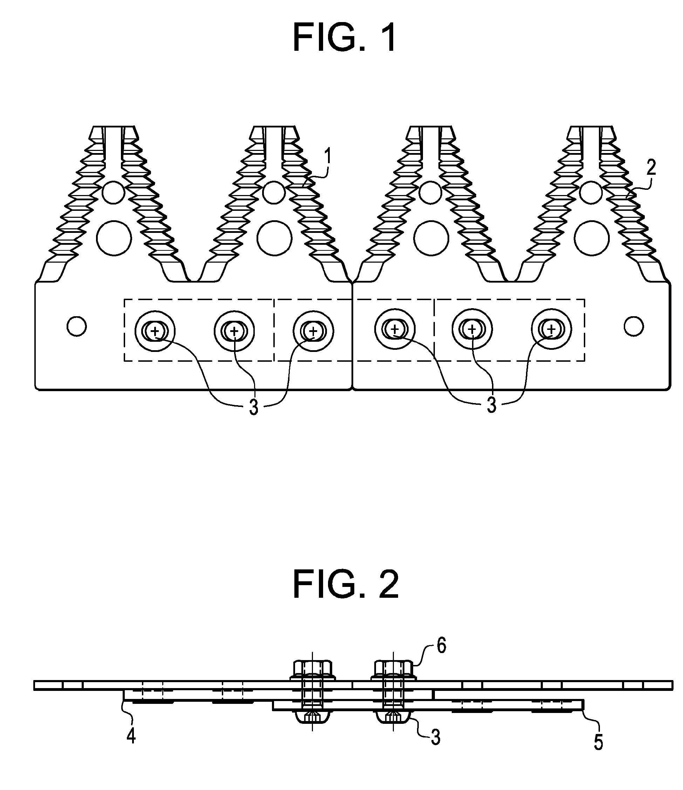

Figure 1 is a top view of an assembled knifeback portion of the sickle bar of a first embodiment of the present invention. This Figure relates to a knifeback portion useful for modular sickle cutting sections having lengths, when viewed from the side, on the order of about four inches. Modular sickle cutting sections 1 and 2 are mounted on first and second modular knifeback bars (not shown in this view) and joined together with use of fasteners, such as bolt 3.

Figure 2 is a front view of an assembled knifeback portion of the sickle bar of the present invention shown in Fig. 1. This view affords a more clear view of the fastening technique. It may be seen that modular sickle cutting sections 1 and 2 are affixed, respectively to upper modular bar 4 and lower modular bar 5. In addition both modular sickle cutting sections 1 and 2 are affixed to both upper modular bar 4 and lower modular bar 5 thereby joining the sickle sections 1 and 2 to the bars 4 and 5 to create a knifeback assembly. Bolts 3 are inserted into aligned holes in sickle sections 1 and 2 and bars 4 and 5 and nuts 6 are engaged with bolts 3 to secure the components together.

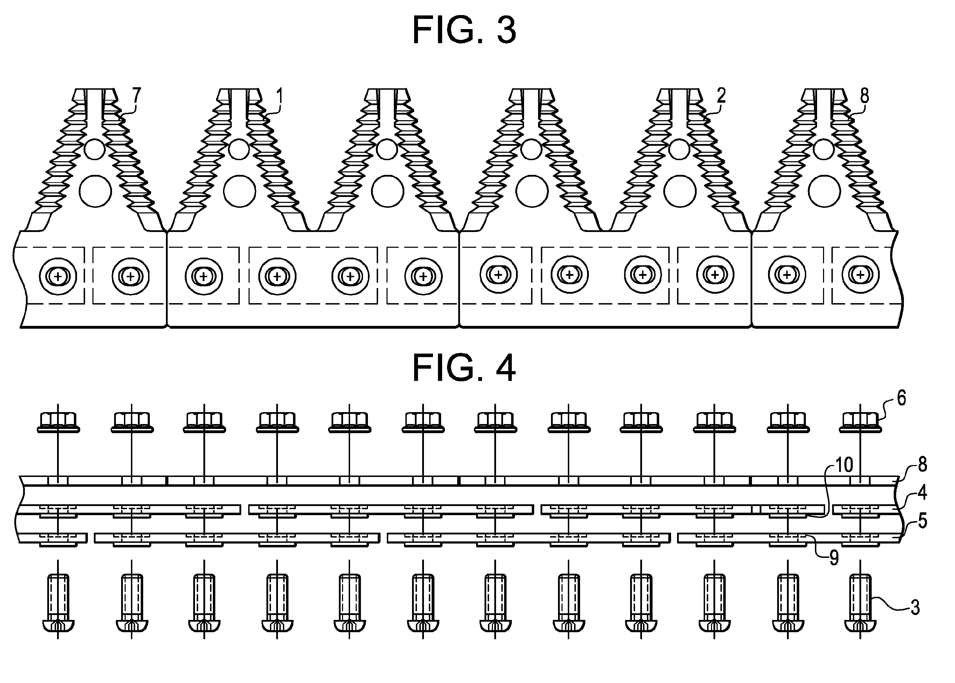

Figure 3 is another top view of an assembled knifeback portion of the sickle bar of the present invention that essentially corresponds to Figure 1 and adds modular sickle cutting sections 7 and 8 to the assembly.

Figure 4 is an exploded side view of the assembled knifeback illustrated in Figure 3. The exploded view provides greater detail regarding the components used in the fastening technique. Bolt 3 is inserted through openings in lower modular bar 5, upper modular bar 4, and modular sickle cutting section 2 and is secured therein with nut 6. Lower modular bar 5 contains mating depression 9 that is sized to receive and secure protrusion 10 that is contained on upper modular bar 4. Protrusion 10 is sized to be press fit into mating depression 9 to ensure that these components are locked in place. As further apparent from this Figure, the locking system functions to lock the components of the knifeback and to secure the modular sickle cutting sections 1, 2, 7, and 8 to the knifeback assembly. The locking system restrains movement of these modular sickle cutting sections in all linear planes parallel to the longitudinal axis of the knife back and also in a plane parallel to such axis.

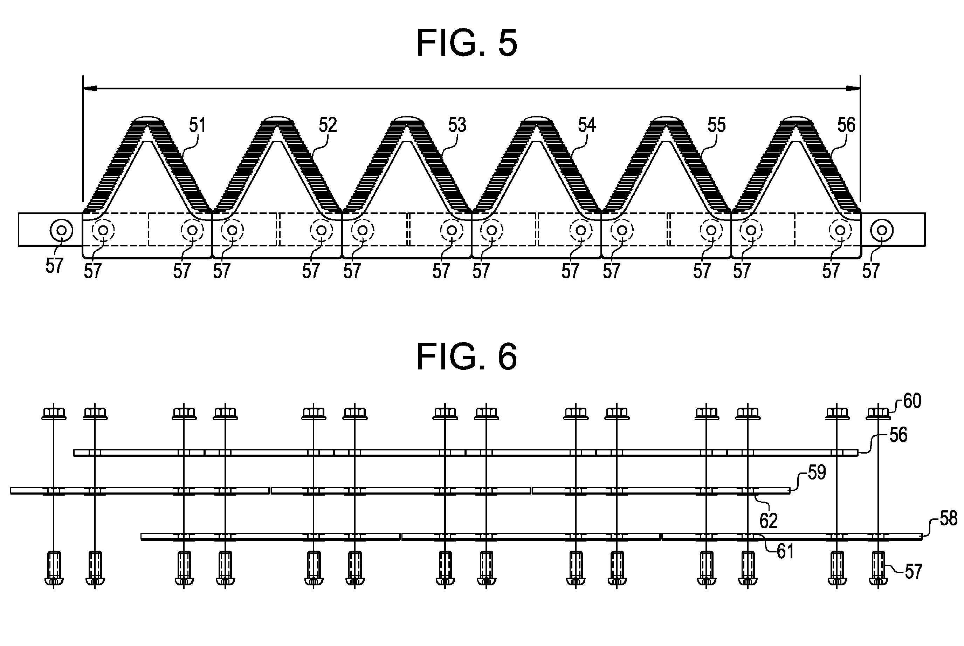

Figure 5 is a top view of an assembled knifeback portion of the sickle bar of a second embodiment of the present invention. This Figure relates to a knifeback portion useful for modular sickle cutting sections having lengths, when viewed from the side, on the order of about three inches. Modular sickle cutting sections 51, 52, 53, 54, 55, and 56 are mounted on multiple modular knifeback bars (not shown in this view) and joined together with use of fasteners, such as bolt 57.

Figure 6 is an exploded side view of the assembled knifeback illustrated in Figure 5. The exploded view provides greater detail regarding the components used in the fastening technique. Bolt 57 is inserted through openings in lower modular bar 58, upper modular bar 59, and modular sickle cutting sections 51, 52, 53, 54, 55, and 56 and is secured therein with nut 60. Lower modular bar 58 contains mating depression 61 that is sized to receive and secure protrusion 62 that is contained on upper modular bar 59. Protrusion 62 is sized to be press fit into mating depression 61 to ensure that these components are locked in place. As further apparent from this Figure, the locking system functions to lock the components of the knifeback and to secure the modular sickle cutting sections 51,52, 53, 54, 55, and 56 to the knifeback assembly. The locking system restrains movement of these modular sickle cutting sections in all linear planes parallel to the longitudinal axis of the knifeback and also in a plane parallel to such axis.

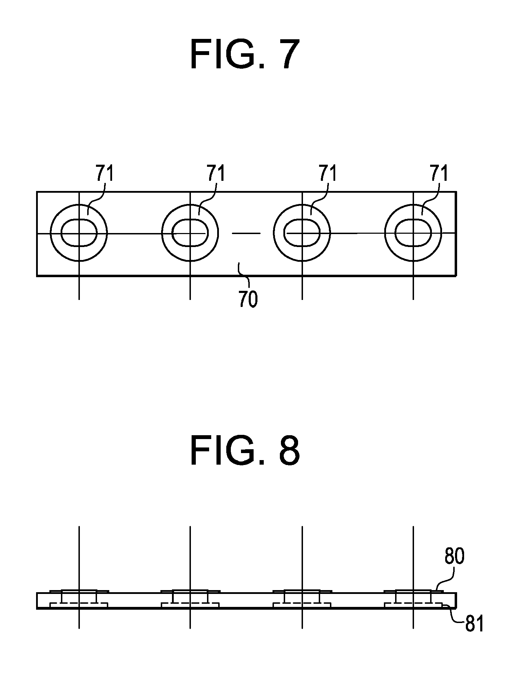

Figure 7 is a top view of a modular knifeback bar component suitable for use in the present invention following a stamping operation. Modular knifeback bar 70 contains round holes 71 that may conveniently be formed by punching as part of a stamping process to form modular knifeback bar 70.

Figure 8 is a side view of the modular knifeback bar component shown in Figure 7. Protrusion 80 and mating depressions 81 may also be formed as part of a stamping process. Once holes 71, protrusions 80, and mating depressions 81 are formed, the modular knifeback is ready for assembly in the manner described above. By performing forming, punching and cutting to desired length operations in a single stamping process, an efficient, precise mode of manufacturing is achieved. The modular knifeback bar components may typically be made from AISI 10B38 steel, austempered to a hardness of from about 30 to about 48 on the Rockwell C scale following the stamping process.

Suitable modular sickle cutting sections may typically be manufactured from high strength steels, including 1035 to 1090 carbon steels; boron steels, including 10B20 to 10B52, alloy steels, including 4140, 4150, and 4160; and tool steels, including O-1, A-2, D-2, and M-4. These steels are typically heat-treated to hardness levels of from about 25 to about 65 on the Rockwell C scale. A typical heat treatment comprises quenching and tempering by following practices and parameters known in the art for such steels.

## Claims

1. A sickle bar for mounting a plurality of adjoining sickle cutting sections along the length of the bar, said sickle bar comprising:
(a) A knifeback having a longitudinal axis and having top and bottom modular bar assemblies including at least two modular bars arranged end-to-end to form a knifeback;
(b) A plurality of sickle cutting sections located side-by-side along said knifeback and against one of said bar assemblies, said sickle cutting sections having holes that extend through said sections;
(c) A fastener extending through said holes in said sickle cutting sections thereby joining together said sickle cutting sections and said top and bottom modular bar assemblies; and
(d) a locking system having a protrusion on one surface of a first modular cutting section and a mating depression to receive and secure said protrusion on an opposite surface of a second modular cutting section wherein, as oriented with respect to the ground when the cutting system is in use, movement of said first and second cutting sections is restrained in all linear planes parallel to the longitudinal axis of the knifeback and in a plane perpendicular to said axis.

2. The sickle bar of claim 1, wherein said fastener comprises a removable bolt.

3. The sickle bar of claim 1, wherein said protrusion is press fit into said mating depression.
